(19) Europäisches Patentamt
European Patent Office
Office européen des brevets

(11) **EP 4 653 516 A1**

(12) **EUROPEAN PATENT APPLICATION**
published in accordance with Art. 153(4) EPC

(43) Date of publication:
**26.11.2025 Bulletin 2025/48**

(21) Application number: **23917624.1**

(22) Date of filing: **06.11.2023**

(51) International Patent Classification (IPC):
**C10B 57/04** (2006.01)  **C01B 32/205** (2017.01)
**C21B 5/00** (2006.01)

(52) Cooperative Patent Classification (CPC):
**C01B 32/205; C10B 57/04; C21B 5/00;**
**Y02P 10/143**

(86) International application number:
**PCT/JP2023/039927**

(87) International publication number:
**WO 2024/154412 (25.07.2024 Gazette 2024/30)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **19.01.2023 JP 2023006814**

(71) Applicant: **JFE Steel Corporation**
**Tokyo 100-0011 (JP)**

(72) Inventors:
• **TAKEHARA, Kenta**
**Tokyo 100-0011 (JP)**
• **TAKASHIMA, Takanori**
**Tokyo 100-0011 (JP)**
• **DOHI, Yusuke**
**Tokyo 100-0011 (JP)**
• **KAWAI, Yuya**
**Tokyo 100-0011 (JP)**

(74) Representative: **Haseltine Lake Kempner LLP**
**Bürkleinstrasse 10**
**80538 München (DE)**

(54) **METHOD FOR PRODUCING COKE**

(57) Provided is a method of producing coke containing solid carbon produced from carbon-containing gas and having sufficient strength to be used in a blast furnace. The method of producing coke includes a carbon generation process of generating solid carbon from carbon monoxide or carbon dioxide, and a coke-producing process of producing coke using coal and the solid carbon.

**EP 4 653 516 A1**

**Description**

TECHNICAL FIELD

The present disclosure relates to a method of producing coke.

BACKGROUND

From the perspective of environmental issues, there is a demand for a decrease in carbon dioxide emissions, for example in coke production and steelmaking processes.

In a blast furnace in the steelmaking process, hot blast is blown into the blast furnace through a tuyere, which causes oxygen in the hot blast to react with coke and pulverized coal as a reductant to generate carbon monoxide gas and hydrogen gas. The carbon monoxide gas and hydrogen gas reduce iron ore charged in the blast furnace. Further, carbon dioxide is generated by this iron ore reduction reaction. Gas (by-product gas) emitted from the blast furnace contains components such as carbon monoxide, carbon dioxide, and hydrogen. These components in the by-product gas may be used as feedstock to generate solid carbon.

In Patent Literature (PTL) 1, a method of producing metal from metal ore in a smelting furnace is described, in which coke is used to generate a reducing mixed gas containing carbon monoxide. In this production method, carbon monoxide is converted to carbonaceous reductant by contact with a catalyst, and this carbonaceous reductant is supplied to the smelting furnace as a substitute for at least a portion of the coke. The carbonaceous reductant is briquetted. Coal-derived binder or tar is used as a binder (corresponding to a binder described below) when making briquettes of the carbonaceous reductant.

In PTL 2, a solid carbon generator and a method of generating solid carbon are described. This solid carbon generator includes: a separator that separates carbon dioxide gas contained in gas generated in a blast furnace; a reactor that decomposes methane gas into solid carbon and hydrogen gas by heating fuel gas mainly composed of methane gas using a heater; and a generator that generates solid carbon and water by reacting carbon dioxide gas separated by the separator and hydrogen gas decomposed by the reactor. The method of generating solid carbon is realized by this solid carbon generator. In this method of generating solid carbon, the solid carbon is obtained in powder form. The solid carbon is mixed with a binder to form granular pellets (granular solid carbonaceous material), which are supplied to the blast furnace.

In PTL 3, a method of producing solid carbon by reducing carbon oxide is described. In this production method, the carbon oxide to be used in the reduction reaction is typically either carbon monoxide or carbon dioxide, and a reductant to be used in the reduction reaction is typically hydrocarbon gas or hydrogen.

In PTL 4, a method for treating off-gas containing carbon oxide is described. This method of treating off-gas includes purifying the off-gas to remove particulate matter, water, undesirable gaseous constituents, and inert gas to generate a dried carbon oxide gas feedstock, and converting at least a portion of the carbon oxide in the dried carbon oxide gas feedstock to solid carbon.

CITATION LIST

Patent Literature

PTL 1: JP S54-150388 A
PTL 2: JP 2021-165214 A
PTL 3: JP 2015-057372 A
PTL 4: JP 2015-516361 A

SUMMARY

(Technical Problem)

Better utilization of by-product gas would realize a further decrease in carbon dioxide emissions in the steelmaking process. When solid carbon generated from by-product gas is used, for example, in a blast furnace as a substitute for coke in a steelmaking process, then example methods of supplying solid carbon to the blast furnace may be blowing into the blast furnace with hot blast through the tuyere or charging into the furnace from the top of the blast furnace. Of these, when solid carbon is blown through the tuyere, the blowing amount is limited. Therefore, when solid carbon can be charged from the top of the furnace, a large amount of solid carbon can be used. However, when solid carbon is charged into the furnace from the top of the furnace, like coke typically used in blast furnaces, the solid carbon is required to have a certain size and strength to help prevent breaking into powder in the blast furnace. Accordingly, there is a demand for agglomerating solid carbon for use in a blast furnace or the like. In particular, in relatively large capacity blast furnaces (for example, blast furnaces that have an internal volume of 1000 $m^3$ or more), the mass of furnace content is large. Therefore, when the strength of the solid carbon mass is low, the agglomerate may break into powder and scatter in the furnace, or particles generated by breaking into powder may obstruct ventilation in the furnace, making it impossible to operate the blast furnace.

In conventional technologies such as those described in PTL 1 and 2, solid carbon may be agglomerated using a binder. However, when agglomerate using a binder is charged into a blast furnace, the binder may volatilize due to heat in the blast furnace, and volatilized components may interfere with a process of gas recovery from the blast furnace, or the agglomerate may break into powder due to heat and impact in the blast furnace. Therefore, it may not be possible to use such agglomerate in large quantities in a blast furnace. Even when agglomerating using a binder, it is not always possible to obtain agglomerate that has adequate strength that does not break into powder in the blast furnace.

Under these circumstances, it is desirable to provide a method of obtaining agglomerate such as coke containing solid carbon produced from carbon-containing gas such as carbon monoxide and carbon dioxide contained in by-product gas, where the agglomerate has sufficient strength to be used in a blast furnace.

In consideration of the above circumstances, it would be helpful to provide a method of producing coke containing solid carbon produced from carbon-containing gas and having sufficient strength to be used in a blast furnace.

(Solution to Problem)

The method of producing coke according to the present disclosure is as follows.

[1] A method of producing coke, the method comprising:

> a carbon generation process of generating solid carbon from carbon monoxide or carbon dioxide; and
> a coke-producing process of producing coke using coal and the solid carbon.

[2] The method of producing coke according to [1], where, in the carbon generation process, carbon monoxide is reacted with hydrogen to generate the solid carbon.

[3] The method of producing coke according to [1] or [2], wherein the carbon generation process comprises:

> a methanogenic process of generating methane by reacting carbon dioxide with hydrogen; and
> a methane pyrolysis process of pyrolyzing the methane produced in the methanogenic process to generate the solid carbon.

[4] The method of producing coke according to any one of [1] to [3], wherein iron content of the solid carbon is 10 mass% or less.

(Advantageous Effect)

According to the present disclosure, a method of producing coke is provided, the coke containing solid carbon produced from carbon-containing gas and having sufficient strength to be used in a blast furnace.

BRIEF DESCRIPTION OF THE DRAWINGS

In the accompanying drawings:

FIG. 1 is a schematic diagram of a reactor that generates solid carbon from carbon monoxide;
FIG. 2 is a photograph of sintered ore after solid carbon 2 was generated;
FIG. 3 is a photograph of solid carbon 2 separated and recovered from sintered ore;
FIG. 4 is a schematic diagram of an electric furnace that generates solid carbon from methane;
FIG. 5 is a schematic diagram of a heating furnace that generates solid carbon from methane;
FIG. 6 is a TEM image of solid carbon 1;
FIG. 7 is a TEM image of solid carbon 3; and
FIG. 8 is a TEM image of solid carbon 4.

DETAILED DESCRIPTION

With reference to the drawings, the following describes the method of producing coke according to an embodiment of the present disclosure.

The following is an overview of the method of producing coke according to the present embodiment.

The method of producing coke according to the present embodiment includes a carbon generation process of generating solid carbon from carbon monoxide (CO) or carbon dioxide ($CO_2$), and a coke-producing process of producing coke using coal and the solid carbon.

According to the method of producing coke of the present embodiment, coke may be produced that contains solid carbon produced from carbon-containing gas and has sufficient strength to be used in a blast furnace.

The following is a detailed description of the method of producing coke according to the present embodiment.

The carbon generation process is a process of generating solid carbon from carbon monoxide or carbon dioxide. In other words, the carbon generation process is a process of producing solid carbon using carbon monoxide or carbon dioxide as feedstock. Carbon monoxide or carbon dioxide included in by-product gas of a blast furnace may be used. The reaction (chemical reaction) to generate solid carbon from carbon monoxide or carbon dioxide is not particularly restricted. In the following description, carbon monoxide and carbon dioxide are in gaseous form.

In the carbon generation process, carbon monoxide may be reacted to generate solid carbon. The temperature at which the following reaction occurs is the temperature at which the Gibbs free energy of the reaction becomes negative, and can vary depending on ambient conditions and the like.

When solid carbon is generated by reacting carbon monoxide in the carbon generation process, the solid carbon may be generated by the Boudouard reaction indicated in Reaction Equation (1) below. The Boudouard reaction indicated in Reaction Equation (1) is capable of generating solid carbon from carbon monoxide at temperatures up to about 700 °C.

$$2CO \rightarrow C + CO_2 \dots \qquad (1)$$

When solid carbon is generated by reacting carbon monoxide in the carbon generation process, the solid carbon may be generated by the decomposition reaction indicated in Reaction Equation (2) below. The decomposition reaction indicated in Reaction Equation (2) is capable of generating solid carbon from carbon monoxide under low oxygen partial pressure.

$$2CO \rightarrow 2C + O_2 \dots \qquad (2)$$

In the carbon generation process, solid carbon may be generated by reacting carbon monoxide with hydrogen. In the following description, hydrogen is in gaseous form.

When solid carbon is generated by reacting carbon monoxide and hydrogen in the carbon generation process, the solid carbon may be generated by the reverse water-gas shift reaction indicated in Reaction Equation (3) below. The reverse water-gas shift reaction indicated in Reaction Equation (3) is capable of generating solid carbon from carbon monoxide at temperatures up to about 650 °C.

$$CO + H_2 \rightarrow C + H_2O \dots \qquad (3)$$

In the carbon generation process, solid carbon may be generated by reacting carbon dioxide with hydrogen.

When solid carbon is generated by reacting carbon dioxide and hydrogen in the carbon generation process, the solid carbon may be generated by the reverse water-gas shift reaction indicated in Reaction Equation (4) below. The reverse water-gas shift reaction indicated in Reaction Equation (4) is capable of generating solid carbon from carbon dioxide at temperatures up to about 650 °C.

$$CO_2 + 2H_2 \rightarrow C + 2H_2O \dots \qquad (4)$$

When solid carbon is generated by reacting carbon dioxide and hydrogen in the carbon generation process, carbon monoxide may first be generated from carbon dioxide and hydrogen by the reverse water-gas shift reaction indicated in Reaction Equation (5) below, and then the solid carbon may be generated by the reaction indicated in Reaction Equation (1) or (2) above. The reverse water-gas shift reaction indicated in Reaction Equation (5) is capable of generating carbon monoxide from carbon dioxide at temperatures of about 850 °C or more.

$$CO_2 + H_2 \rightarrow CO + H_2O \dots \qquad (5)$$

When solid carbon is generated by reacting carbon dioxide in the carbon generation process, the solid carbon may be generated by the decomposition reaction indicated in Reaction Equation (6) below. The decomposition reaction indicated in Reaction Equation (6) is capable of generating solid carbon from carbon dioxide under low oxygen partial pressure.

$$CO_2 \rightarrow C + O_2 \ ... \qquad (6)$$

Further, in the carbon generation process, solid carbon may be generated by carrying out a methanogenic process of generating methane ($CH_4$) by reacting carbon monoxide or carbon dioxide with hydrogen, followed by a methane pyrolysis process of pyrolyzing the methane produced in the methanogenic process to generate the solid carbon. In the following description, methane is in gaseous form.

In the methanogenic process, methane may be generated from carbon monoxide and hydrogen by the methanation reaction indicated in Reaction Equation (7) below. The methanation reaction indicated in Reaction Equation (7) is capable of generating methane from carbon monoxide at temperatures up to about 650 °C.

$$CO + 3H_2 \rightarrow CH_4 + H_2O \ ... \qquad (7)$$

In the methanogenic process, methane may be generated from carbon dioxide and hydrogen by the methanation reaction indicated in Reaction Equation (8) below. The methanation reaction indicated in Reaction Equation (8) is capable of generating methane from carbon dioxide at temperatures up to about 600 °C.

$$CO_2 + 4H_2 \rightarrow CH_4 + 2H_2O \ ... \qquad (8)$$

In the methane pyrolysis process, solid carbon may be generated from methane by the pyrolysis reaction indicated in Reaction Equation (9) below. The pyrolysis reaction indicated in Reaction Equation (9) is capable of generating solid carbon from methane in air at temperatures of about 500 °C or more.

$$CH_4 \rightarrow C + 2H_2 \ ... \qquad (9)$$

The carbon generation process may use a mixture of two or more of the following gases: carbon monoxide, carbon dioxide, and methane. In the following, carbon monoxide, carbon dioxide, and methane are sometimes referred to as feedstock gas.

In the carbon generation process, a mixed gas may be used in which carbon monoxide, carbon dioxide, and methane are mixed with hydrogen and nitrogen (each in gaseous form).

In the carbon generation process, after methane is generated by the methanation reaction indicated in Reaction Equation (8), carbon is preferably generated by the pyrolysis reaction indicated in Reaction Equation (9). For example, the reaction rate of reactions such as the reverse water-gas shift reaction indicated in Reaction Equation (4) is not high, and therefore the reaction rate may be low under some operating conditions. However, the reaction rate of the methanation reaction indicated in Reaction Equation (8) is higher than that of the reverse water-gas shift reaction indicated in Reaction Equation (4), and the reaction rate of the pyrolysis reaction indicated in Reaction Equation (9) is generally near 100 %. Therefore, in the carbon generation process, it is preferable to generate methane by the methanation reaction indicated in Reaction Equation (8) and then generate carbon by the pyrolysis reaction indicated in Reaction Equation (9).

In the carbon generation process, it is preferable to use a catalyst, preferably a catalyst that contains iron. The use of a catalyst containing iron may promote carbon generation.

In the Boudouard reaction indicated in Reaction Equation (1), it is preferable to use a catalyst containing iron. This promotes the reaction.

Similarly, it is preferable to use a catalyst containing iron in the pyrolysis reaction indicated in Reaction Equation (9). This promotes the reaction.

Similarly, it is preferable to use a catalyst containing iron in the reverse water-gas shift reaction indicated in Reaction Equation (5). This promotes the reaction.

The type of catalyst containing iron is not particularly limited. Examples of catalysts containing iron include metallic iron, iron oxide, and compounds containing iron. Catalysts containing iron are more preferably metallic iron or iron oxide containing silicon, sulfur, or the like. Specifically, for example, sintered ore or directly reduced iron or iron ore pellets may be charged into the reactor, and the iron or iron oxide contained in the sintered ore or the directly reduced iron or the iron ore pellets may be used as a catalyst. When a catalyst containing iron is used, a phenomenon may occur in which carbon in the gas dissolves in the catalyst and the dissolved carbon precipitates. Specifically, the carbon of reactants such as those in Reaction Equations (1) to (4), (6), and (9) dissolve in the catalyst, and as the reaction proceeds, solid carbon is generated. Further, when a catalyst is used, hydrogen is preferred in reaction systems where hydrogen is in contact with the catalyst, as this has an effect of helping prevent deactivation of the catalyst surface.

When the pyrolysis reaction indicated in Reaction Equation (9) is carried out, alumina may be charged into the reactor. By charging alumina, a solid surface area increases due to heterogeneous nucleation, and an effect of promoting carbon precipitation and uniformizing temperature by using alumina that has high heat capacity can be expected, resulting in improved yields.

The solid carbon generated in the carbon generation process may be a powdered or granular carbon-containing material containing solid carbon. In the following description, the term solid carbon is used to encompass carbon-containing material.

The iron content of the solid carbon is preferably 50 mass% or less. The iron content of the solid carbon is more preferably 10 mass% or less. The solid carbon may include, for example, iron components as catalysts used in the production process. The solid carbon need not contain iron.

Coke may be generated by dry distillation of green pellets formed by mixing coal with solid carbon produced from carbon monoxide or carbon dioxide as feedstock as described above.

The solid carbon used in the green pellets may be solid carbon produced from carbon monoxide, solid carbon produced from carbon dioxide, or solid carbon produced via methane, or a mixture of these.

EXAMPLES

In the following, the method of producing coke according to the present embodiment is described based on examples. The method of producing coke according to the present embodiment is not limited to the examples described below.

The production of solid carbon for use in producing coke is described below. Solid carbon was produced by reducing carbon monoxide (CO) with hydrogen ($H_2$) and by pyrolyzing methane ($CH_4$) produced from carbon dioxide ($CO_2$).

First, an example of producing solid carbon by reduction of carbon monoxide is described.

(Production of solid carbon 1 and 2)

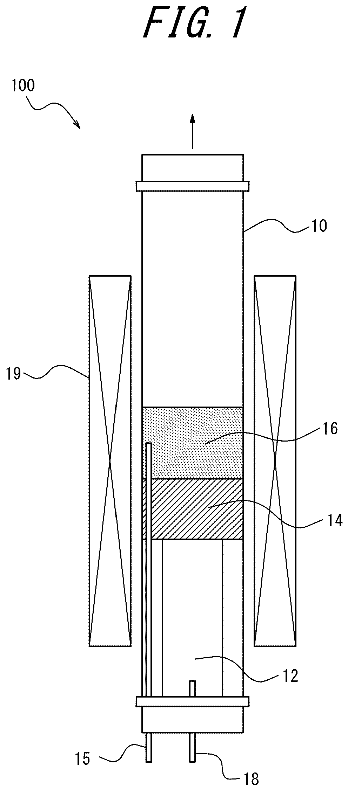

Solid carbon was generated from carbon monoxide by the reverse water-gas shift reaction indicated in Reaction Equation (3) above, using a vertical reactor 100 schematically illustrated in FIG. 1, as follows. The reactor 100 includes a core tube 10 that has a cylindrical shape and an inner diameter of 80 mm, and a heater 19 arranged around the core tube 10 for heating the core tube 10. The core tube 10 is arranged with the axial direction of the cylinder along the vertical direction.

First, the core tube 10 was charged with alumina support 12, alumina balls 14, and sintered ore 16 as catalyst, in this order. The alumina balls 14 and the sintered ore 16 were deposited in respective layers in the furnace. A layer of the sintered ore 16 was placed over a layer of the alumina balls 14. Then, through a gas inlet pipe 18 disposed at the bottom of the core tube 10, a mixed gas of carbon monoxide, hydrogen, and nitrogen that had a volume ratio of 31 %, 19 %, and 50 %, respectively, was fed into the furnace of the core tube 10 as feedstock gas. Exhaust gas containing unreacted carbon monoxide, hydrogen, water vapor, and nitrogen was exhausted out of the system through an opening at the top end of the core tube 10.

The furnace temperature was set at 550 °C or 800 °C by adjusting the output of the heater 19. The furnace temperature was the temperature measured by a thermocouple 15 inserted in the layer of the sintered ore 16.

The gas flow rate of the mixed gas was 17 L/min (calculated at 0 °C and 1 atm). The mixed gas supply was continued for 3 h to precipitate sooty solid carbon on the surface of the sintered ore 16. In the following, the example precipitated at 550 °C is referred to as solid carbon 1 and the example precipitated at 800 °C is referred to as solid carbon 2.

The solid carbon was collected from the reactor 100 along with the sintered ore 16, and sieved through a sieve with a 125 $\mu$m mesh size to separate the sintered ore 16 from the solid carbon and collect the solid carbon 1 and the solid carbon 2.

Of the sintered ore 16 with the solid carbon 2 precipitated on (attached to) the surface, 1.5 mass% was solid carbon. Table 1 lists the results of the component analysis of the solid carbon 2. T.Fe (total iron content) is the value determined in accordance with JIS M 8212. Further, the values for FeO (iron oxide) and M.Fe (metallic iron) were determined in accordance with JIS M 8213. Further, C (carbon) is the value determined by organic elemental analysis.

[Table 1]

Table 1

| Carbon type | Feedstock gas type | Temp. (°C) | Catalyst | Microscopic state | C (mass%) | M.Fe (mass%) | FeO (mass%) | T.Fe (mass%) |
|---|---|---|---|---|---|---|---|---|
| Solid carbon 1 | Mixed gas containing CO | 550 | Sintered ore | Fibrous | 50.9 | 0.5 | 4.1 | 34.7 |
| Solid carbon 2 | Mixed gas containing CO | 800 | Sintered ore | Fibrous | 72.0 | 7.8 | 7.2 | 13.6 |
| Solid carbon 3 | $CH_4$ produced from $CO_2$ | 900 | Reduced iron | Fibrous | 69.3 | 4.1 | 6.0 | 8.9 |
| Solid carbon 4 | $CH_4$ produced from $CO_2$ | 1400 | Not used | Spherical particulate | 99.9 | 0.0 | 0.0 | 0.0 |

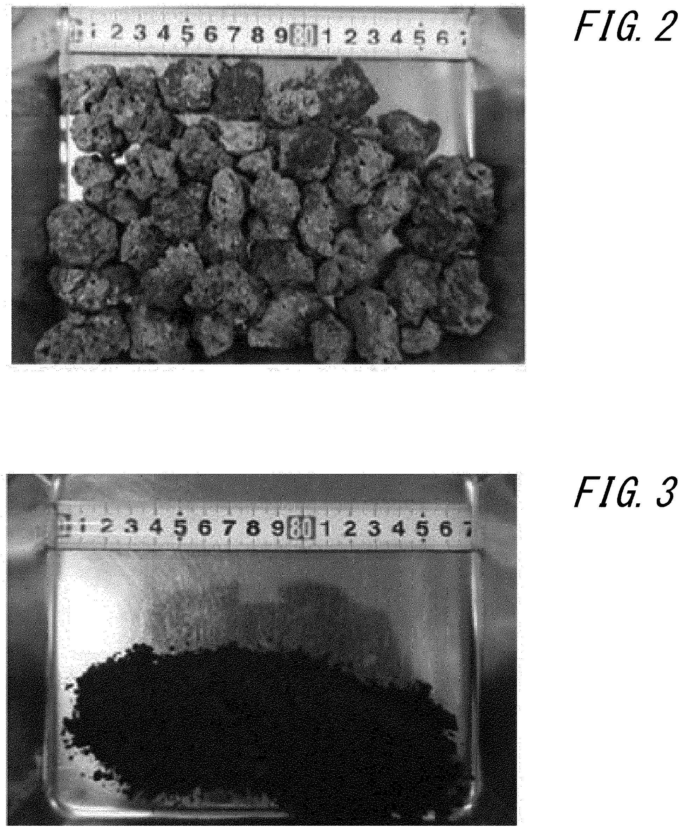

FIG. 2 is a photograph of the sintered ore after the solid carbon 2 was generated at 800 °C using the mixed gas. FIG. 3 is a photograph of the solid carbon 2 separated and recovered from the sintered ore.

As illustrated in FIG. 3, the solid carbon 2 was visually observed to be in the form of a cohesive powder. The cumulative 10 % diameter, cumulative 50 % diameter (median size), and cumulative 90 % diameter of the solid carbon 2 illustrated in FIG. 3 were, in this order, 2.1 $\mu$m, 6.6 $\mu$m, and 14.8 $\mu$m. The cumulative 10 % diameter, cumulative 50 % diameter, and cumulative 90 % diameter are the number-based values measured by laser diffraction/scattering particle size distribution measurement. Thus, 90 % or more of the recovered particles of the solid carbon 2 had a particle size of 14.8 $\mu$m or less.

The following is an example of producing solid carbon via methane. The methane was produced by the methanation reaction indicated in Reaction Equation (7) above.

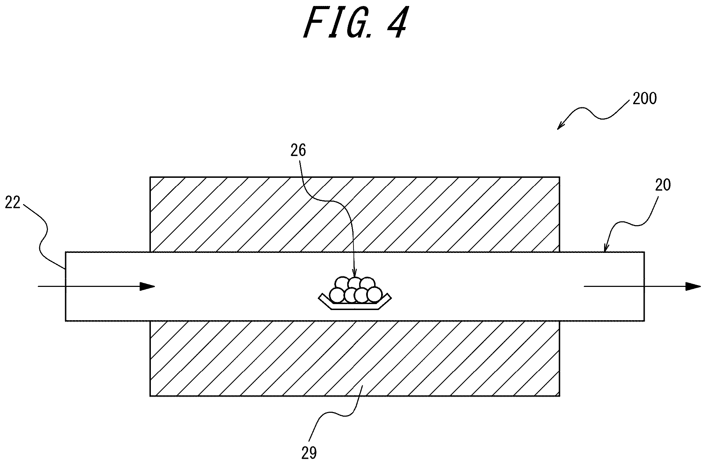

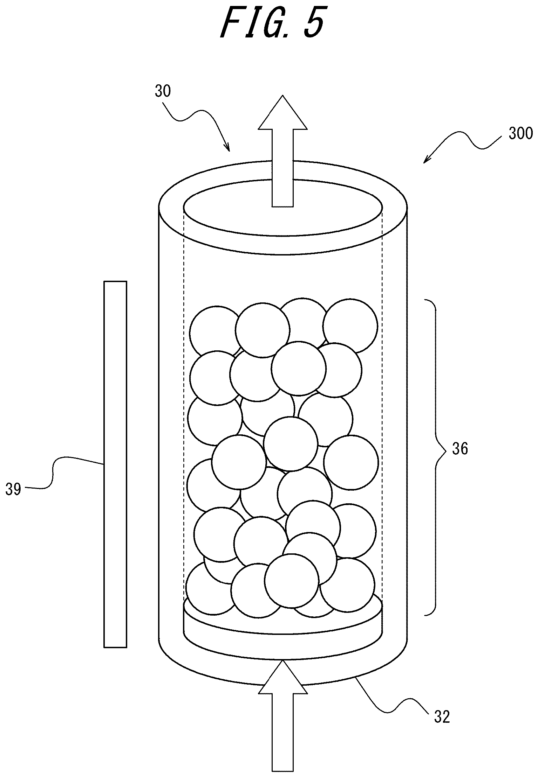

The solid carbon was generated from the methane using an electric furnace 200 schematically illustrated in FIG. 4 and a heating furnace 300 schematically illustrated in FIG. 5. As illustrated in FIG. 4, the electric furnace 200 includes a furnace tube 20 that has a cylindrical shape and is arranged along the horizontal direction and a heater 29 for heating the furnace tube 20. As illustrated in FIG. 5, the heating furnace 300 includes a furnace core tube 30 arranged along the vertical direction and a heater 39 disposed alongside the furnace core tube 30 for heating the furnace core tube 30.

(Production of solid carbon 3)

First, as illustrated in FIG. 4, spherical directly reduced iron balls 26, obtained by reducing 10 mm diameter spherical iron ore pellets, were placed in a dish-shaped container and charged as a catalyst into the furnace of the electric furnace 200. 30 g (about 20 to 30 balls) of the iron balls 26 were charged into the furnace.

Methane (100 % concentration) was then supplied into the furnace as a feedstock gas from a gas inlet 22 that was one opening end of the furnace tube 20, to generate solid carbon. Exhaust gas containing unreacted methane and water vapor was exhausted out of the system from the other end of the furnace tube. Methane was supplied at 1.0 L/min (calculated at 0 °C and 1 atm).

The temperature of the methane (furnace temperature inside the electric furnace 200) was controlled at 900 °C by adjusting the output of the heater 29.

Methane supply continued for 1 hr to precipitate the solid carbon 3.

The solid carbon 3 was then collected from the electric furnace 200 along with the iron balls 26, and sieved through a sieve with a 125 $\mu$m mesh size to separate the solid carbon 3 from the iron balls 26.

(Production of solid carbon 4)

Into the furnace core tube 30 (alumina tube, inner diameter 80 mm) of the heating furnace 300 illustrated in FIG. 5, 500 g of alumina balls 36 that were spherical and had a diameter of 6 mm were charged to form a layer about 50 mm high as a soaking zone.

Methane (100 % concentration) was then supplied as a feedstock gas into the furnace core tube 30 from a gas inlet 32 that was the lower end of the furnace core tube 30. Methane was supplied at 1.0 L/min (calculated at 0 °C and 1 atm).

The temperature of the methane (furnace temperature inside the furnace core tube 30) was controlled at 1400 °C (±10 °C) by adjusting the output of the heater 39.

Methane supply continued for 1 hr to precipitate the solid carbon 4.

The solid carbon 4 was collected from the furnace core tube 30 along with the alumina balls 36, and sieved through a sieve with a 125 μm mesh size to separate the solid carbon 4 from the alumina balls 36.

Table 1 lists the production conditions and states of the solid carbon 1 to 4, together with the component analysis results and microscopic states (TEM observation results) of the solid carbon 1, 3, and 4. The values of T.Fe, FeO, M.Fe, and C for the solid carbon 1, 3, and 4 were determined in the same way as for the solid carbon 2.

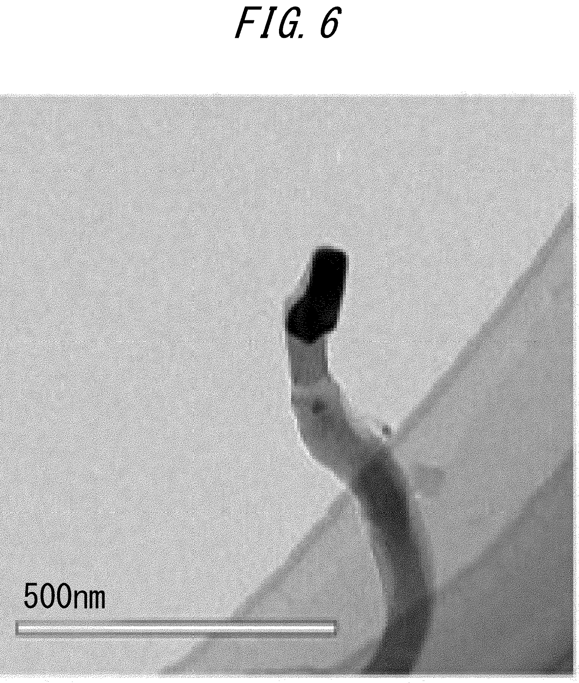

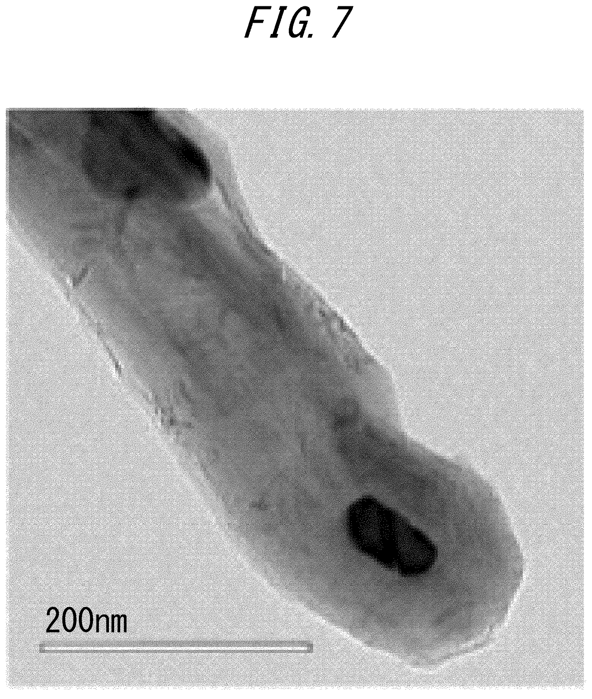

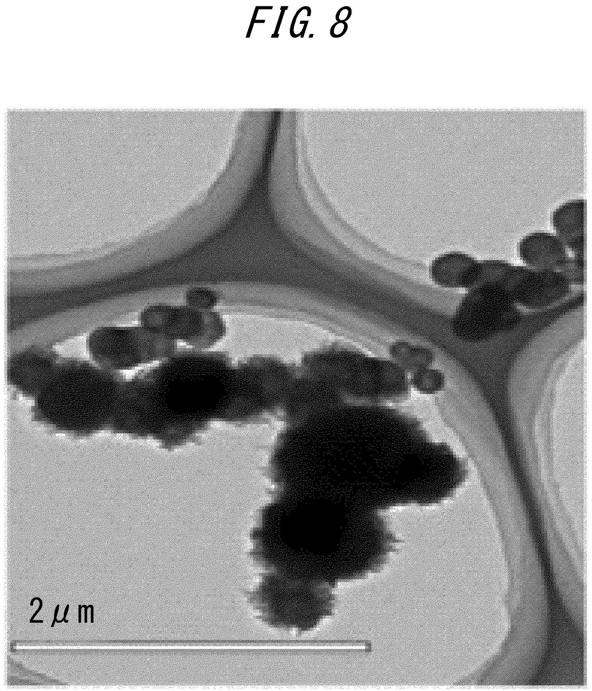

FIG. 6, FIG. 7, and FIG. 8 illustrate TEM observation results (TEM images) of the solid carbon 1, the solid carbon 3, and the solid carbon 4, respectively.

The state according to TEM observation of the solid carbon 1 and 3 obtained in the reaction at 900 °C or less was fibrous with an aspect ratio of 10 or more.

The state according to TEM observation of the solid carbon 4 obtained in the reaction at 1400 °C was spherical particulate and a particle size measured in the TEM image was about 0.2 μm to 2.0 μm.

From the TEM observation results, the solid carbon 4 was precipitated at a high temperature (1400 °C), and therefore the reactivity was high and the formation of carbon in the gas phase occurred as the main reaction, which is thought to have precipitated the solid carbon 4 as spherical particulate. In contrast, when the solid carbon 1 and the solid carbon 3 were precipitated at a temperature of 900 °C or less, the reduction reaction of carbon monoxide (solid carbon 1) and the pyrolysis reaction of methane (solid carbon 3) proceed with difficulty, and a reaction catalyzed by iron occurs as the main reaction, which is considered to have caused the solid carbon 1 and the solid carbon 3 to be precipitated in fibrous form.

The TEM observation results of the solid carbon 2 are not illustrated, but as illustrated in FIG. 3, the solid carbon 2 was visually observed to be in the form of a cohesive powder, and microstructure was fibrous like that of the solid carbon 1 and 3.

Coke was produced using the solid carbon 1 through 4 produced as described above. In this example, coke was produced by mixing the solid carbon 1 to 4 with coal.

Now, coal has the property of melting and solidifying (viscosity) when dry distilled. The viscosity of coal is an essential property in the production of coke. Viscosity is determined by the properties of the coal when it is softened and melted (flowability). Therefore, when evaluating whether a certain coal grade is suitable as a raw material for coke, it is effective to use values (measured or estimated) related to the softening and melting properties of the coal as an index.

In this test, the Gieseler maximum flow rate MF (hereinafter referred to as MF value) was used as an evaluation index of viscosity or flowability. MF values were obtained according to the method specified in JIS M 8801. MF values were compared using the common logarithm (logMF).

Mixtures of coal A and the solid carbon 1 (mixtures of coal such as coal A and solid carbon may hereinafter be referred to as coal mixtures) were evaluated as Production Examples 1 through 3. The ratio of the coal A to the solid carbon 1 (amount of solid carbon added in the mixture (mass%)) is listed in Table 2. Further, the logMF values of these mixtures of Production Examples 1 to 3 are also listed in Table 2. The coal A was ground to a sieve size of 0.425 mm or less (ground to pulverized coal) before being mixed with solid carbon.

[Table 2]

Table 2

|  | Coal type | Carbon type | Added amount (mass%) | log MF (log ddpm) |
|---|---|---|---|---|
| Reference Production Example 1 | Coal A | - | - | 2.7 |
| Production Example 1 | Coal A | Solid carbon 1 | 5 | 1.7 |
| Production Example 2 | Coal A | Solid carbon 1 | 10 | 1.1 |
| Production Example 3 | Coal A | Solid carbon 1 | 20 | 0.0 |
| Production Example 4 | Coal A | Solid carbon 2 | 5 | 1.9 |
| Production Example 5 | Coal A | Solid carbon 2 | 10 | 1.4 |
| Production Example 6 | Coal A | Solid carbon 2 | 20 | 1.1 |
| Production Example 7 | Coal A | Solid carbon 3 | 5 | 2.0 |
| Production Example 8 | Coal A | Solid carbon 3 | 10 | 1.5 |

(continued)

|  | Coal type | Carbon type | Added amount (mass%) | log MF (log ddpm) |
|---|---|---|---|---|
| Production Example 9 | Coal A | Solid carbon 3 | 20 | 1.3 |
| Production Example 10 | Coal A | Solid carbon 4 | 5 | 2.3 |
| Production Example 11 | Coal A | Solid carbon 4 | 10 | 2.4 |
| Production Example 12 | Coal A | Solid carbon 4 | 20 | 2.1 |

In Production Examples 4 through 6, coal mixtures of the coal A and the solid carbon 2 were evaluated. In Production Examples 7 through 9, coal mixtures of the coal A and the solid carbon 3 were evaluated. In Production Examples 10 through 12, coal mixtures of the coal A and the solid carbon 4 were evaluated. The mixing ratios and logMF values for each are listed in Table 2, as in Production Examples 1 through 3. As Reference Production Example 1, only the coal A was evaluated and the logMF value is also listed in Table 2.

Although the logMF value is not particularly limited, when the logMF value is 1.6 or more, coke can be produced without problems using a typical method of producing coke (dry distillation of coal without solid carbon mixed), without the need to use a special method of producing coke. According to Table 2, regardless of the type of solid carbon in the range of the present Examples, the logMF value was 1.6 or more when the amount of solid carbon added to the coal mixture was 5 mass% or less, and can be evaluated as a good raw material for coke. A logMF value of 2.0 or more is more preferable as a raw material for coke.

In the case of coal mixtures as in Production Examples 1 through 12, the logMF value of the coal mixture also depends on the coal type mixed with the solid carbon. Therefore, the evaluation that the amount of solid carbon added is good at 5 mass% or less based on these Production Examples assumes mixing with the coal A.

Next, the coal mixtures were dry distilled to produce coke, and the crushing strength of the coke was evaluated. Further, coke was produced using only blended coal B and blended coal C as a comparison to the coal mixtures, and the crushing strength of the coke was evaluated.

The blended coal B and the blended coal C were made by mixing several brands of coal and adjusting the logMF value. The batch quantities for mixing the blended coal B and the blended coal C were such that the mass after mixing was 200 g for each blended coal.

For the blended coal B, the weighted average value of Ro (average maximum vitrinite reflectance, JIS M 8816) weighted by the blending ratio of each brand, was 1.0, and the weighted average value of the logMF value, weighted by the blending ratio of each brand, was 2.3. For the blended coal C, the weighted average value of Ro weighted by the blending ratio of each brand, was 1.0, and the weighted average value of the logMF value, weighted by the blending ratio of each brand, was 2.7.

The amount of solid carbon added to the coal mixture to evaluate crushing strength, based on the results of each of the Production Examples described above, was 5 mass% or 10 mass% for each of the solid carbons 1 through 4 (Examples 1 through 8). The blended coal C was used as the coal in the coal mixtures. The blended coal B was ground to a sieve size of 3 mm or less (ground to pulverized coal) before being tested. The blended coal C was ground to a sieve of 3 mm or less (ground to pulverized coal) before being mixed with solid carbon. The carbon types and solid carbon additions for each of the coal mixtures in Examples 1 through 8 are listed in Table 3.

[Table 3]

Table 3

|  | Coal type | Carbon type | Added amount (mass%) | Crushing strength (MPa) |
|---|---|---|---|---|
| Reference Example 1 | Blended coal B | - | - | 4.8 |
| Reference Example 2 | Blended coal C | - | - | 5.6 |
| Example 1 | Blended coal C | Solid carbon 1 | 5 | 4.9 |
| Example 2 | Blended coal C | Solid carbon 2 | 5 | 5.2 |
| Example 3 | Blended coal C | Solid carbon 3 | 5 | 5.2 |
| Example 4 | Blended coal C | Solid carbon 4 | 5 | 5.4 |
| Example 5 | Blended coal C | Solid carbon 1 | 10 | 4.1 |

(continued)

|  | Coal type | Carbon type | Added amount (mass%) | Crushing strength (MPa) |
|---|---|---|---|---|
| Example 6 | Blended coal C | Solid carbon 2 | 10 | 4.5 |
| Example 7 | Blended coal C | Solid carbon 3 | 10 | 4.7 |
| Example 8 | Blended coal C | Solid carbon 4 | 10 | 5.1 |

Dry distillation of each of the coal mixtures in Examples 1 through 8, and the blended coal B and the blended coal C in Reference Examples 1 and 2 was carried out as follows.

Each of the coal mixtures in Examples 1 to 8, and the blended coal B and the blended coal C in Reference Examples 1 and 2 were filled into a dry distillation can so that the bulk density (on a dry mass basis) was 830 kg/m$^3$. Then, with a 1 kg weight on top of the dry distillation can, the content was dry distilled in an electric furnace at a furnace temperature of 1050 °C for 6 h, removed from the electric furnace, and nitrogen cooled to obtain the coke of Examples 1 to 8 and Reference Examples 1 and 2.

Cylindrical samples having a diameter of 9.6 mm and a height of 10 mm were cut from each of these coke samples after the dry distillation, and strength measurements (crushing strength measurements) were carried out using an autograph (Model: AGS-X, produced by Shimadzu Corporation). The displacement rate was set at 2 mm/min. The average of the measurements of five cylindrical samples was taken as the crushing strength after firing.

The crushing strength S (Pa) can be determined by the following Expression (10), based on the load P (N) at failure of the cylindrical sample, the height of the cylindrical sample L (m), and the diameter of the cylindrical sample D (m).

$$S = 2 \times P/\pi LD \qquad ...(10)$$

The crushing strengths of coke from Examples 1 to 8 and Reference Examples 1 and 2, obtained as described above, are also listed in Table 3.

From the results of the crushing strength of the coke of Examples 1 to 8, it was found that the coke of Examples 1 to 8 had comparable crushing strength to the coke of Reference Examples 1 and 2, which were produced from coal only, even when produced by the same typical method of producing coke (dry distillation method). The crushing strengths of the coke of Examples 1 to 8 exceed 3 MPa, which is typically sufficient for use in blast furnaces. That is, the coke of Examples 1 to 8 is strong enough to withstand use in a blast furnace.

Now, as indicated by Production Examples 1 through 12, a decrease in logMF values was observed for the coal mixtures. However, the coke of Examples 1 through 8 had crushing strength comparable to the coke of Reference Example 1 and Reference Example 2, which were produced from coal only, as described above. Therefore, in coke produced from the coal mixtures, the effect of solid carbon on crushing strength (in particular an effect as to reduce crushing strength) is expected to be small. This is presumably due to the solid carbon 1 through 3 in these Example being fibrous carbon, and reinforcement (strength improving effect) due to these fibers was achieved.

Thus, the method of producing coke according to the present embodiment makes it possible to provide coke that contains solid carbon produced from carbon-containing gas such as blast furnace by-product gas that has sufficient strength to be used in a blast furnace. Further, the production of solid carbon from carbon-containing gas, such as blast furnace by-product gas, can provide a technology for producing carbon material with low carbon dioxide emission. Further, a decrease in carbon dioxide emissions during coke production can be realized. Further, by making it possible to produce coke that has sufficient strength to be used in blast furnace using solid carbon produced from carbon-containing gases such as blast furnace by-product gas, it is possible to decrease carbon dioxide emissions in the steelmaking process.

The method of producing coke can be provided as described above.

Each configuration described according to the above embodiments (including other embodiments, the same applies hereinafter) may be applied in combination with a configuration described according to another embodiment, as long as no contradiction arises. The embodiments described herein are examples, the present disclosure is not limited to the described examples, and appropriate modifications may be made within a scope that does not depart from the spirit of the present disclosure.

INDUSTRIAL APPLICABILITY

The present disclosure is applicable to methods of producing coke.

REFERENCE SIGNS LIST

10:     furnace core tube
100:    reactor
12:     alumina support
14:     alumina balls
15:     thermocouple
16:     sintered ore
18:     gas inlet pipe
19:     heater
2:      solid carbon
20:     furnace tube
200:    electric furnace
22:     gas inlet
26:     iron balls
29:     heater
30:     furnace core tube
300:    heating furnace
32:     gas inlet
36:     alumina balls
39:     heater

**Claims**

1.  A method of producing coke, the method comprising:

    a carbon generation process of generating solid carbon from carbon monoxide or carbon dioxide; and
    a coke-producing process of producing coke using coal and the solid carbon.

2.  The method of producing coke according to claim 1, where, in the carbon generation process, carbon monoxide is reacted with hydrogen to generate the solid carbon.

3.  The method of producing coke according to claim 1, wherein the carbon generation process comprises:

    a methanogenic process of generating methane by reacting carbon dioxide with hydrogen; and
    a methane pyrolysis process of pyrolyzing the methane produced in the methanogenic process to generate the solid carbon.

4.  The method of producing coke according to any one of claims 1 to 3, wherein iron content of the solid carbon is 10 mass% or less.

# FIG. 1

FIG. 2

FIG. 3

# FIG. 4

## FIG. 5

## FIG. 6

# FIG. 7

200nm

## FIG. 8

## INTERNATIONAL SEARCH REPORT

| International application No. |
|---|
| **PCT/JP2023/039927** |

| A. | CLASSIFICATION OF SUBJECT MATTER |
|---|---|

*C10B 57/04*(2006.01)i; *C01B 32/205*(2017.01)i; *C21B 5/00*(2006.01)i
FI:  C10B57/04; C01B32/205; C21B5/00 302

According to International Patent Classification (IPC) or to both national classification and IPC

| B. | FIELDS SEARCHED |
|---|---|

Minimum documentation searched (classification system followed by classification symbols)

C10B57/04; C01B32/205; C21B5/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2013-122084 A (JFE STEEL CORPORATION) 20 June 2013 (2013-06-20) | 1, 4 |
|  | claims 1, 11 |  |
| Y |  | 2-3 |
| Y | JP 2012-524015 A (SEERSTONE LLC) 11 October 2012 (2012-10-11) | 2 |
|  | claims 1, 13, 16 |  |
| Y | WO 2021/086643 A1 (SEERSTONE LLC) 06 May 2021 (2021-05-06) | 3 |
|  | paragraphs [0007], [0051] |  |
| A | JP 2021-165214 A (MITSUBISHI HEAVY INDUSTRIES, LTD.) 14 October 2021 (2021-10-14) | 1-4 |

☐ Further documents are listed in the continuation of Box C.  ☑ See patent family annex.

| | |
|---|---|
| \*  Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **05 December 2023** | **19 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/039927**

| Patent document cited in search report | | | Publication date (day/month/year) | Patent family member(s) | | | Publication date (day/month/year) |
|---|---|---|---|---|---|---|---|
| JP | 2013-122084 | A | 20 June 2013 | (Family: none) | | | |
| JP | 2012-524015 | A | 11 October 2012 | WO | 2010/120581 | A1 | |
| | | | | claims 1, 13, 16 | | | |
| | | | | US | 2012/0034150 | A1 | |
| | | | | EP | 2419553 | A1 | |
| | | | | CN | 102459727 | A | |
| | | | | KR | 10-2012-0094416 | A | |
| WO | 2021/086643 | A1 | 06 May 2021 | JP | 2023-501945 | A | |
| | | | | EP | 4051655 | A1 | |
| | | | | CN | 115052834 | A | |
| | | | | AU | 2020375635 | A1 | |
| | | | | KR | 10-2022-0141783 | A | |
| JP | 2021-165214 | A | 14 October 2021 | US | 2023/0150820 | A1 | |
| | | | | WO | 2021/205935 | A1 | |
| | | | | CN | 115362127 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 54150388 A
- JP 2021165214 A
- JP 2015057372 A
- JP 2015516361 A